# EUROPEAN PATENT SPECIFICATION

(11) **EP 4 437 847 B1**
(45) Date of publication and mention of the grant of the patent: **04.11.2026**
(21) Application number: 24168072.7
(22) Date of filing: 02.04.2024
(51) Int. Cl.: A01M 1/06, A01M 3/00, A01M 5/08

(54) **MACHINE FOR SUCTIONING INSECTS FROM PLANTS**
MASCHINE ZUM ABSAUGEN VON INSEKTEN VON PFLANZEN
MACHINE À SUCER LES INSECTES DES PLANTES

(30) Priority: 31.03.2023 IT 202300006357
(43) Date of publication of application: 02.10.2024
(73) Proprietor: Sandrini, Nicola, 37060 Gazzo Veronese (VR) (IT)
(72) Inventor: Sandrini, Nicola, 37060 Gazzo Veronese (VR) (IT)
(74) Representative: Gallo, Luca

(56) References cited:
- EP-A1- 3 225 740
- JP-A- H09 328 729
- US-A- 4 825 582
- US-A- 5 255 469

## Description

### Field of application

The present invention regards a machine for suctioning insects from plants according to the preamble of the independent claim 1.

The present machine for suctioning insects from plants is advantageously employable for treating plants and the like in a cultivation field, and in particular for their disinfestation of insects.

In particular, the machine for suctioning insects from plants, object of the present invention, is employable for combating the infestation of insects in low and medium height cultivations, passing above the beds/ridges of the agricultural cultivations in open fields or in greenhouses without the use of phytosanitary products or the like.

Therefore, the machine for suctioning insects from plants, object of the present invention, advantageously has use in the field of production of farming machines.

### State of the art

In the agricultural field, the problem tied to insects has been known for some time; insects infest cultivations, damaging the harvest and causing economic damage for the operators in the field.

In order to limit the damage caused by such insects, it is known to employ chemical products (in particular phytosanitary products such as for example insecticides), which are used for treating cultivations and killing some types of insects. For example, the insecticides can be administered both in solid form, by means of their distribution on the ground at the plants to be treated, or more usually in liquid form, through direct spraying of the crown or of the leaves, or by means of their mixing with water during irrigation, or once again by means of their injection by means of endotherapy treatments (in particular for tall trees).

However, the use of such phytosanitary products has shown in practice that it does not lack drawbacks.

A first drawback lies in the fact that their use is often quite damaging for the health of people, for example in the case of direct oral assumption, due to the consumption of food products that have undergone the treatment, either via suction or via contact with the skin (in particular for the operators who executed the treatment).

A further drawback lies in the fact that their use can lead to an alteration of the organoleptic properties of the products of the treated cultivations, which cause an altered perception by a consumer.

A further drawback, which has been felt quite considerably in recent periods, is represented by the environmental risk tied to their use, such as for example to the pollution of the ground and water and/or t the accumulation of the phytosanitary products themselves in the food chain.

In addition, the phytosanitary products are not always able to act effectively against insects, often resulting unsuitable for obtaining a complete disinfestation of the treated plants, in particular in the event in which the plants are infested by multiple types of insects.

Indeed it is often necessary, in order to increase their effectiveness to employ selective products, which are suitable designed to act against only one species or family of infesting insects.

Such such phytosanitary products are highly selective, the latter have often proven ineffective against the types of insects that infest the plants. This implies that the action of such phytosanitary products is not resolutive against all types of insects and, therefore, in order to increase the disinfesting action, it is necessary to use different types of products, with a consequent increase of the abovementioned costs and drawbacks.

In order to overcome the abovementioned drawbacks, insect suctioning machines have been developed, i.e. machines adapted to suction an air flow from the plants in order to remove the infesting insects, as is for example described in the document US 4825582.

The aforesaid insect suctioning machine of known type comprises a support frame connectable to a power take off of a drive unit of a tractor, and at least one suction unit, which is mechanically fixed to the support frame. The suction unit comprises a suction mouth placed within a hollow containment body. In particular, the suction mouth is actuatable in rotation in order to suction the insects present on the plants of the cultivation which are situated within the containment body itself.

Such machine provides that the insects are suctioned by the fan and that they are killed by entering in contact with the same blades of the suction mouth. Nevertheless, such machine does not ensure that the insects are killed. Therefore, such machine of known type has in practice shown poor efficiency in ensuring the extirpation of the insects from the plants of the cultivations.

Therefore, machines have been must in order to suction insects, also comprising a crushing grid, placed above the suction mouth in order to allow killing the suctioned insects, and such crushing grid is provided with a plurality of blades positioned parallel to each other. The aforesaid blades are tilted by an acute angle, acute with respect to the horizontal lying plane, so as to intercept the insects suctioned by the suction mouth.

However, also such machines in order to suction insects of the prior art, have shown in practice that they do not lack drawbacks.

The main drawback lies in the fact that the crushing grid of the machines for suctioning of the prior art tends to be obstructed during the suction steps, in particular due to the suction of third elements such as leaves, small bushes etc.

In particular, during the suction of the insects, leaves of the plants are also accidentally suctioned, which obstruct the crushing grid and therefore must be removed manually by an operator in order to allow the correct operation of the suction mouth.

Such drawback is felt even more in the event in which the terrain is wet and wet leaves or ground are suctioned.

The obstruction of the crushing grid, in addition to not ensuring the correct operation of the fan, determines the risk of overheating the fan itself, following the decrease of the air flow circulating in the containment body due to the blockage of the crushing grid itself.

A further drawback lies in the fact that the arrangement of the blades in the machines of known type ensures optimal effectiveness only for insects of a specific size range. Otherwise, if used for disinfesting plants infested by types of insects with dimensions different from those for which the crushing grid was optimized, the machine of known type loses effectiveness. For example, in the event in which the plants to be treated are infested by insects with dimensions smaller than the dimensions for which the crushing grid was optimized, the probability that such insects, once suctioned, impact against the blades of the grid is considerably reduced, therefore decreasing the effectiveness of the machine for treating plants of known type.

### Presentation of the invention

In this situation, the problem underlying the present invention is that of eliminating the drawbacks of the abovementioned prior art, by providing a machine for suctioning insects from plants which is not subject to obstruction.

In particular, object of the present invention is to provide a machine for suctioning insects from plants which allows automatically removing the suctioned foliage.

A further object of the present invention is to provide a machine for suctioning insects from plants which allows treating different types of plants.

A further object of the present invention is to provide a machine for suctioning insects from plants which allows suctioning insects that are different from each other.

A further object of the present invention is to provide a machine for suctioning insects from plants which is inexpensive and simple to attain.

### Brief description of the drawings

The technical characteristics of the invention, according to the aforesaid objects, are clearly seen in the contents of the below-reported claims and the advantages thereof will be more evident from the following detailed description, made with reference to the enclosed drawings, which represent several merely exemplifying and non-limiting embodiments of the invention, in which:
- figure 1 shows a front view of a machine for suctioning insects, object of the invention, mounted on a farm tractor during operation, according to a first embodiment thereof;
- figure 2 shows a front perspective view of the machine of figure 1 mounted on a farm tractor;
- figure 3 shows a front view of the machine of figure 1 mounted on a farm tractor;
- figure 4 shows a rear perspective view of the machine of figure 1;
- figure 5 shows a top view of the machine of figure 1;

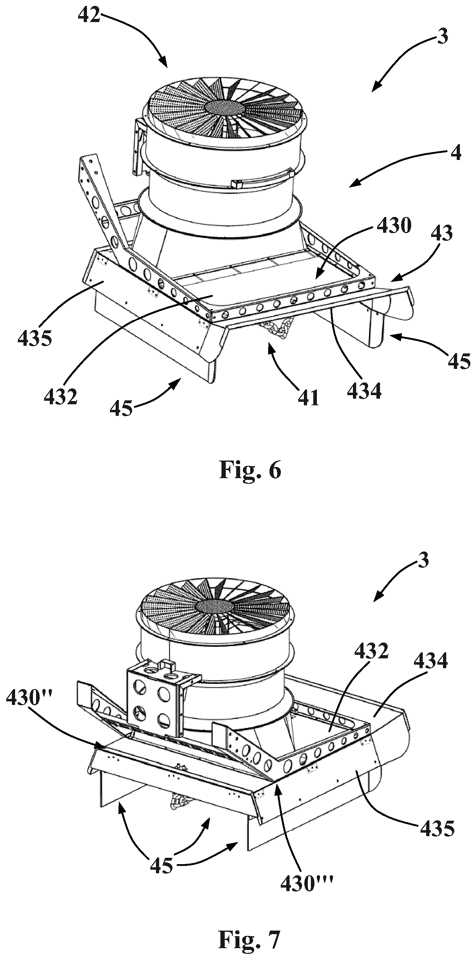

- figure 6 shows a front perspective view of a suction unit of the present machine;
- figure 7 shows a rear perspective view of the suction unit of figure 6;

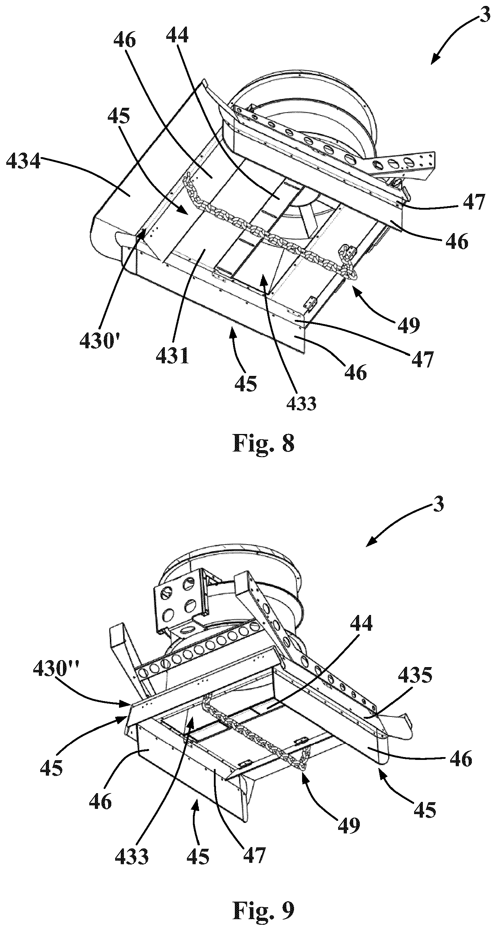

- figure 8 shows a first bottom perspective view of the suction unit of figure 6;
- figure 9 shows a second bottom perspective view of the suction unit of figure 6;

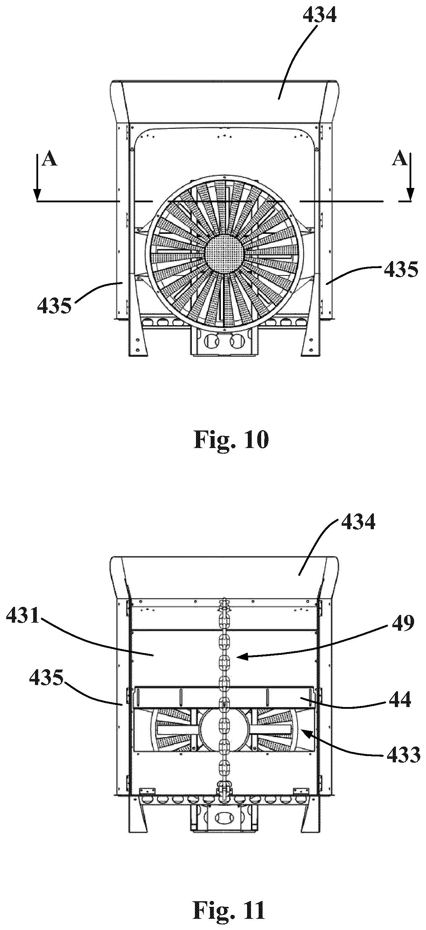

- figure 10 shows a top view of the suction unit of figure 6;
- figure 11 shows a bottom view of the suction unit of figure 6;
- figure 12 shows a front section view of the suction unit of figure 6 according to trace A-A of figure 10;
- figure 13 shows a sectional perspective view of the suction unit of figure 6 according to trace A-A of figure 10;
- figure 14 shows a perspective view of the present machine, in particular provided with a modular extension;
- figure 15 shows crushing means of the present machine, partially exploded, with several parts removed in order to better show other parts;
- figure 16 shows a first embodiment variant of the crushing means of figure 15;
- figure 17 shows a detail of the first embodiment variant of the crushing means of figure 15;

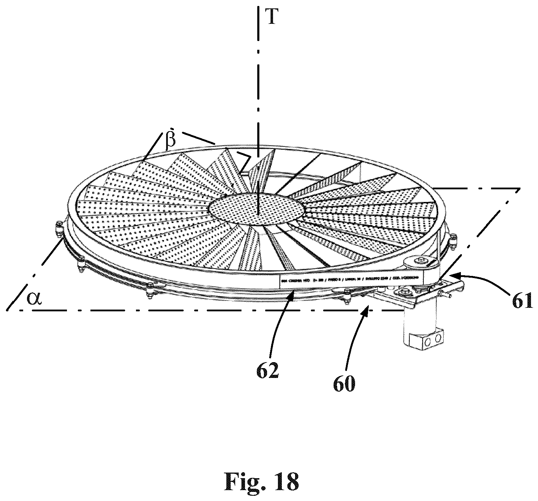

- figure 18 shows movement means of the crushing means of figure 15;
- figure 19 shows a second embodiment of the present machine 1;
- figure 20 shows a third embodiment of the present machine 1, with several parts removed in order to better show other parts;
- figure 21 shows a fourth embodiment of the present machine 1, with several parts removed in order to better show other parts;

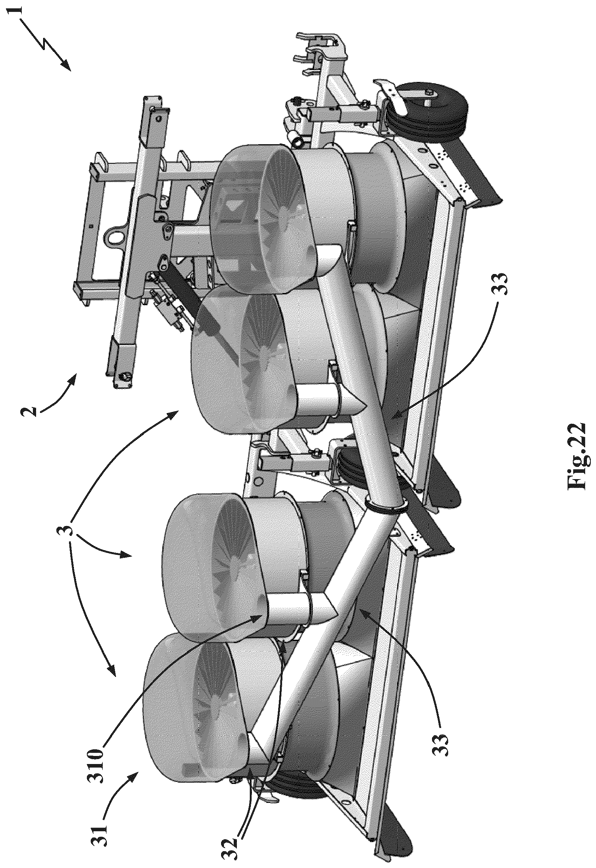

- figure 22 shows a fifth embodiment of the present machine 1, with several parts removed in order to better show other parts.

### Detailed description of a preferred embodiment

With reference to the enclosed drawings, reference number 1 overall indicates the machine in order to suction insects from plants, object of the present invention.

The machine 1, object of the invention, is advantageously arranged for suctioning the insects 10 from plants 11, which are planted on one or more cultivation beds/ridges B, preferably low plants, such as for example tomato, potato, arugula plants etc., or high plants 11 preferably placed along the rows, preferably substantially rectilinear.

Preferably, the beds/ridges B are covered with a mulching fabric, in a per se known manner, so as to prevent the growth of weeds, or more generally for protecting the terrain from external agents and maintaining the properties without requiring further treatments. In particular, the mulching fabric can be a fabric made of polymer material, e.g. of polyamide.

According to the idea underlying the present invention, the machine 1 for suctioning insects 10 from plants 11 comprises a support frame 2, preferably made of metal material, which is intended to be connected to a drive unit 20 in order to advance on a terrain.

For such purpose, the support frame 2 is advantageously provided with at least one pair of guide wheels 27 (preferably idle), which are susceptible of being abutted against the ground during the operation of the machine 1 in order to allow the advancement of the support frame 2 driven by the aforesaid drive unit 20. The machine 1 can be of towed or self-propelled type. In the case of towed machine, the drive unit 20 is preferably a separate farm tractor 13 to which the machine 1 is connected, while in the case of self-propelled machine 1 the drive unit 20 is directly integrated in the machine 1, in a manner per se known to the man skilled in the art and therefore not described in detail hereinbelow.

Advantageously, the farm tractor 13 is placed downstream of the machine 1 in order to push the latter along an advancing direction Y on the terrain substantially parallel to a main direction X along which the plants 11 to be treated are aligned, or along which the cultivation beds/ridges B are extended, on which the plants are planted.

Otherwise, the farm tractor 13 can be placed upstream of the machine 1 along the advancing direction Y on the terrain, so as to tow the machine 1 itself.

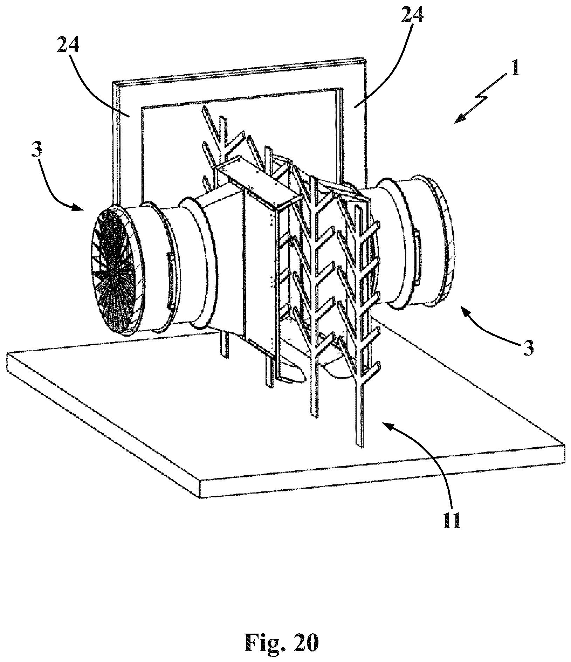

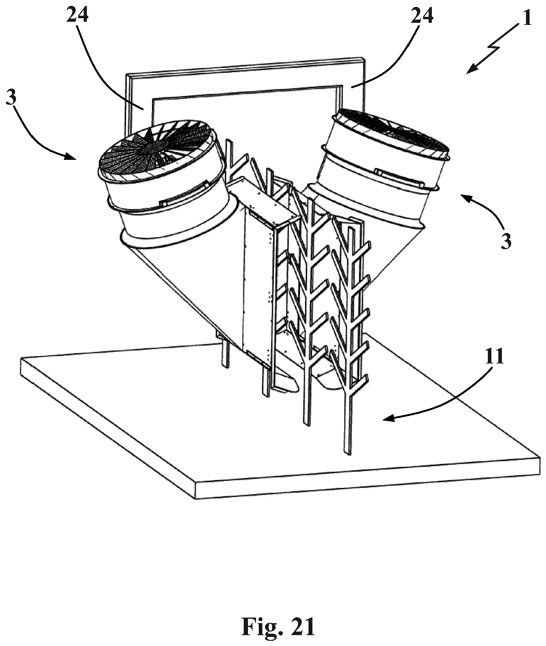

Preferably, the support frame 2 is extended mainly along an extension direction V that is substantially horizontal, advantageously orthogonal to the advancing direction Y, and has an extension that is preferably substantially rectilinear. Alternatively, the support frame 2 can be curved or have a discontinuous extension (e.g. elbow-shaped), for example in accordance with a third and a fourth embodiment of the machine 1, illustrated respectively in figure 20 and 21, and described in detail hereinbelow.

The machine 1 for suctioning insects 10 from plants 11 also comprises a power connector, which is fixed to the support frame 2 and is intended to be connected to an actuation member, adapted to impart a power to the power connector, as is better illustrated hereinbelow. Advantageously, the power connector is intended to power supply various functions of the machine 1, described in detail hereinbelow.

More in detail, the actuation member is a motor, e.g. hydraulic or electric, which is preferably mounted on the drive unit 20 and is connected to the power connector by means of a power take off of the drive unit 20, in a manner that is well known to the man skilled in the art.

Alternatively, the actuation member can be directly mounted on the machine 1 and be provided with a transmission intended to be connected to the power connector in order to transmit power to the latter.

Preferably, the power connector is connected to a hydraulic motor supplied by a pump with variable flow positioned in a technical space of the farm tractor 13.

The machine 1 for suctioning insects 10 from plants 11 also comprises at least one suction unit 3, which is fixed to the support frame 2.

Advantageously, the machine 1 comprises multiple suction units 3, each fixed to the support frame 2, and such suction units 3 are preferably aligned along an alignment direction that is substantially parallel to the extension direction V of the support frame 2.

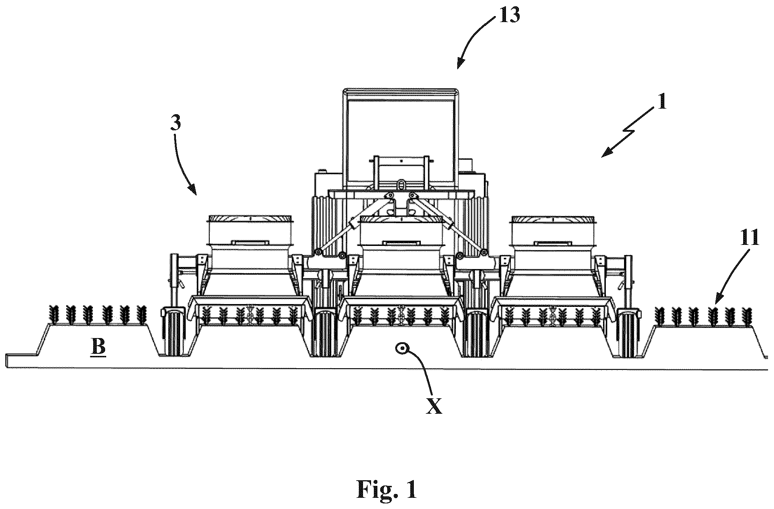

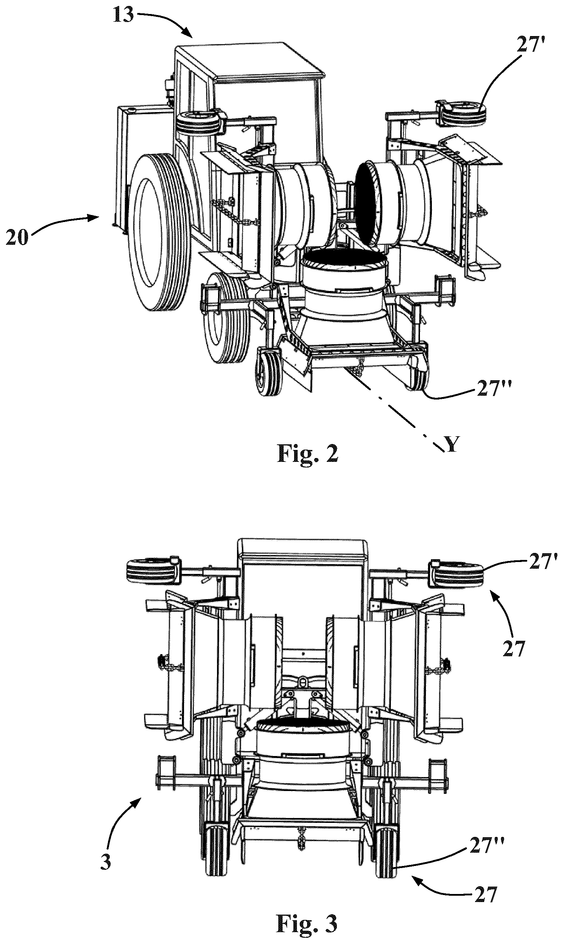

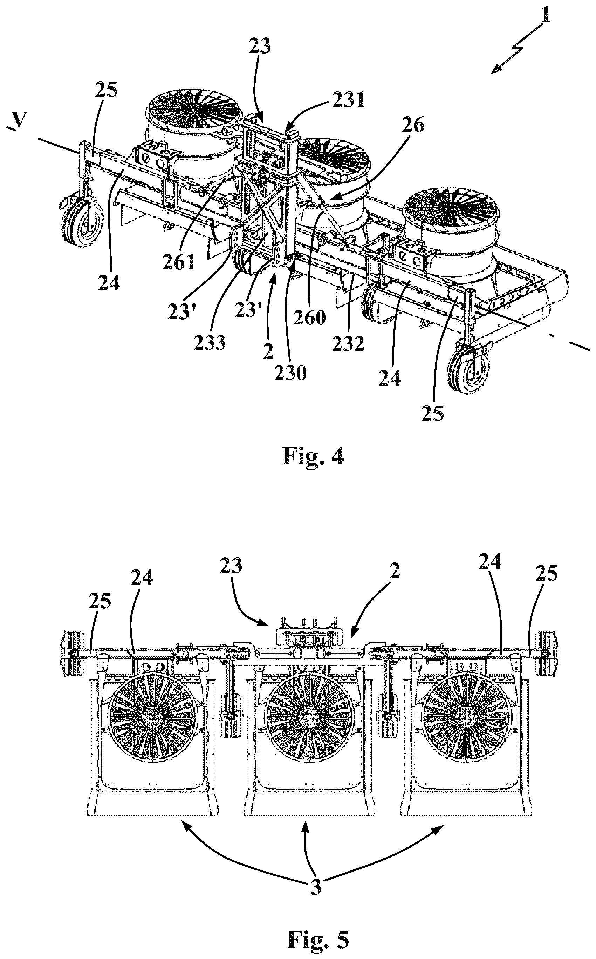

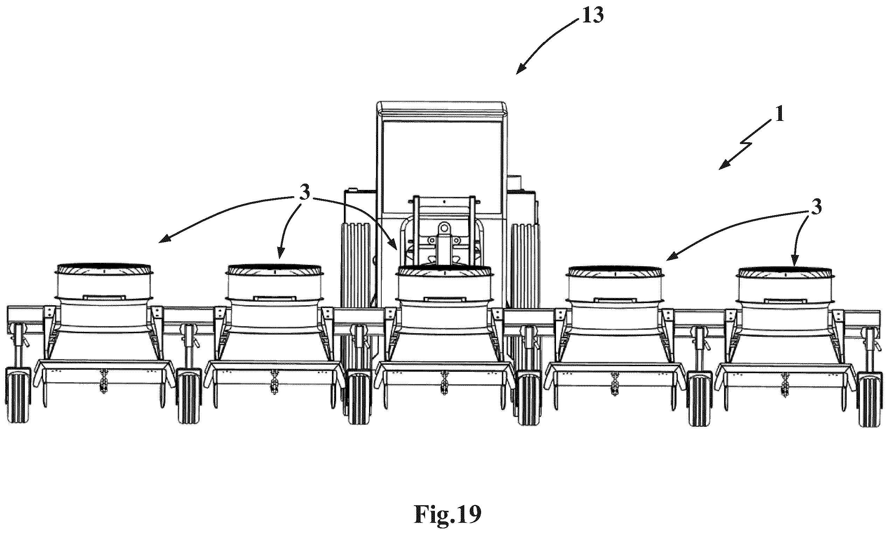

For example, in accordance with a first embodiment of the machine 1 illustrated in figures 1-5, described more in detail hereinbelow, the machine 1 comprises three suction units 3. Otherwise, in accordance with a second embodiment of the machine 1 illustrated in figure 19, the machine 1 comprises five suction units 3.

Otherwise, moreover, in accordance with the third and fourth embodiments of the machine 1 illustrated respectively in figures 20 and 21, the machine 1 comprises two suction units 3, which are intended to be placed laterally with respect to the plants 11 to be treated. Advantageously, the aforesaid third and fourth embodiments are employable in order to suction insects 10 from high plants 11.

The suction unit 3 of the machine 1 comprises a containment body 4, provided with a suction channel 40 which is extended between a suction mouth 41, susceptible of being directed towards the plants 11 to be treated, and an opposite outlet mouth 42.

In particular, for example in the case of the first and second embodiments of the machine 1, the suction mouth 41 is directed towards the beds/ridges B.

Otherwise, in accordance for example with the third and fourth embodiments of the machine 1, the suction units 3 are advantageously placed laterally with respect to the plants 11, preferably with the respective suction mouths 41 directed towards the plants 11 themselves.

The suction unit 3 of the machine 1 also comprises at least one suction fan 5, which is placed in the suction channel 40, is rotatably mounted in the containment body 4 and is operatively connected to the power connector.

The suction fan 5 is actuatable by the power connector rotating around a first rotation axis W in order to suction an air flow 12 from the suction mouth 41 towards the outlet mouth 42 and thus suction the insects 10 from the plants 11.

More in detail, the suction fan 5 forces the suction of the insects 10 situated on the plants 11, suctioning them together with an air flow 12 that suctioned by the suction fan 5 from the suction mouth 41 towards the outlet mouth 42. In accordance with the embodiments illustrated in the enclosed figures, during the operation of the machine 1 the suction fan 5 of the suction group 3 is placed with the first rotation axis W substantially vertical, such that the air flow 12 is directed from the suction mouth 41 towards the outlet mouth 42 of the containment body 4.

In other words, the suction fan 5 is arranged for generating a depression such to remove the insects 10 from the plants 11. For such purpose, the suction fan 5 is configured for exerting a volumetric flow advantageously comprised between 2000 m³/h and 100000 m³/h. Preferably, the air flow is comprised between 10000 m³/h and 60000 m³/h and still more preferably comprised between 25000 m³/h and 45000 m³/h_{.}

In this manner, it is possible to obtain a nearly complete suction of the insects 10 from the plants 11 without however compromising the integrity of the latter.

Advantageously, the suction fan 5 comprises, in a conventional manner and hence not discussed in detail hereinbelow, an impeller 501 coaxial with the first rotation axis W and connected to a rotation shaft arranged for moving the impeller 501 around the first rotation axis W itself, and a plurality of blades 502 mechanically connected to the impeller 501 and rotated by the latter, so as to generate the air flow 12 susceptible of removing the insects 10 from the plants 11.

Advantageously, the blades 502 of the suction fan 5 have a tilt angle, measured between an orthogonal plane and the blade 502 itself, which can be adjusted in order to increase or decrease the air flow 12.

The suction unit 3 of the machine 1 also comprises crushing means 6, mounted in the containment body 4 and placed to intercept the suction channel 40, downstream of the suction fan 5.

More in detail, the crushing means 6 are interposed between the suction fan 5 and the outlet mouth 42, in order to intercept the air flow 12 which flows from the suction fan 5 towards the outlet mouth 42, before such air flow 12 traverses the aforesaid outlet mouth 42. In accordance with the preferred embodiment, in which the suction channel 40 is extended substantially vertically, during the use of the machine 1 the crushing means 6 are placed above the suction fan 5.

The crushing means 6 comprise a support body 7, fixed to the containment body 4 and provided with a perimeter wall 70 delimiting a passage opening 71 for the air flow 12.

The crushing means 6 also comprise a plurality of crushing sheets 8, which are mechanically connected to the support body 7, are extended radially from a central body 80 to the perimeter wall 70 of the support body 7 and are placed to intercept the passage opening 71, in order to intercept and crush the insects 10 suctioned by the suction fan 5.

In particular, each crushing sheet 8 is extended between a first end 84, which is placed at the central body 80, and a second end 85, which is placed at the perimeter wall 70 of the support body 7.

Advantageously, each crushing sheet 8 is mechanically connected, at the first end 84 thereof, to the central body 80, and preferably at the second end 85 thereof to the perimeter wall 70.

Advantageously, the crushing sheets 8, during use (i.e. during the operation of the machine 1), are stopped, in particular to the support body 7.

Advantageously, each of the crushing sheets 8 defines, with a crushing sheet 8 adjacent to passage section 81 through which the crushed insects 10 can pass beyond said crushing means 6 in order to exit from the outlet mouth 42 of the suction unit 3.

Advantageously, the passage section 81 is tapered from the perimeter wall 70 of the support body 7 towards the central body 80.

In other words, the aforesaid passage section 81 is wider at the perimeter wall 70 with respect to its width at the central body 80.

Advantageously, each crushing sheet 8 has a plat-like form, and is preferably provided with a thickness comprised between 0.2 mm and 4 mm, and still more preferably between 0.5 and 2 mm.

Advantageously, the crushing sheets 8 have a plurality of through holes 8', which traverse the crushing sheet 8 for the entire thickness, so as to facilitate the air flow 12 towards the outlet mouth 42 of the containment body 4. Preferably, the aforesaid through holes 8' are equally distributed along the entire surface of each crushing sheet 8. Advantageously, such through holes 8' have a diameter comprised between 0.8 mm and 2.5 mm.

In particular, each crushing sheet 8 is provided with a first edge 810 and with a second edge 811, each of which extended between the first and the second end 84, 85.

Advantageously, the first and the second edge 810, 811 of the crushing sheets 8 are separated from each other by respective connector sections, both at the first end 84 and at the second end 85. In other words, the crushing sheets 8 have a substantially trapezoidal section in which one base of the trapezoid substantially coincides with the first end 84 (hence placed at the central body 80), the opposite base substantially coincides with the second end 85 (hence placed at the perimeter wall 70), while the two oblique sides coincide with the first edge 810 and the second edge 811 (hence placed radially between the aforesaid central body 80 and the perimeter wall 70).

Advantageously, the passage section 81 is extended between a (first) enlarged section 82, at the perimeter wall 70 of the support body 7, in which two adjacent crushing sheets 8 are placed at a first distance D1, preferably comprised between 50 and 150 mm, and still more preferably between 70 and 100 mm, and an opposite (second) narrow section 83, at the central body 80, in which two adjacent crushing sheets 8 are placed at a second distance D2, smaller than the first distance D1 and preferably comprised between 10 and 60 mm, and still more preferably between 15 and 30 mm. In particular, the aforesaid first distance D1 and the second distance D2 define, respectively, the width of the enlarged section 82 and of the narrow section 83.

In particular, the first distance D1 corresponds with the distance between the second edge 811 of a crushing sheet 8 and the second edge 811 of an adjacent crushing sheet 8, measured at the second ends 85 of the crushing sheets 8.

The second distance D2 advantageously corresponds with the distance between the second edge 811 of a crushing sheet 8 and the second edge 811 of an adjacent crushing sheet 8, measured at the first ends 84 of the crushing sheets 8.

In this manner, the third elements, such as for example leaves, earth etc., accidentally suctioned by the machine 1, being subject to the centrifugal force generated by the rotary motion of the suction fan 5, are thrust towards the perimeter wall 70, at which, by finding enlarged section 82 of the passage section 81, they more easily exit from the outlet mouth 42 without obstructing the crushing means 6 of the suction unit 3.

Advantageously, each of the crushing sheets 8 is extended with a tapered profile from the perimeter wall 70 of the support body 7 towards the central body 80.

In particular, the distance between the first edge 810 and the second edge 811 measured at the first end 84 of each crushing sheet 8 is smaller than the distance between the first edge 810 and the second edge 811 measured at the second end 85 of the crushing sheets 8 themselves.

Advantageously, therefore, each crushing sheet 8 is provided with a trapezoidal section in which the smaller base of the trapezoid coincides with the first end 84 while the larger base coincides with the second end 85.

Advantageously, the crushing sheets 8 are placed on a common lying plane α, passing through the crushing sheets 8.

More in detail, the lying plane α is to be intended as the plane defined by the set of crushing sheets 8, on which such crushing sheets 8 lie side-by-side, and not to be intended necessarily as the lying plane α of a single crushing sheet 8, on which it lies, i.e. its surface.

For example, the lying plane α is defined as the plane passing through the first edges 810 of the crushing sheets 8.

Preferably, the lying plane α is substantially orthogonal to the first rotation axis W of the suction fan 5, and therefore during the operation of the machine 1 is preferably substantially horizontal.

Advantageously, each of the crushing sheets 8 is tilted with respect to the lying plane α by an angle comprised between 30° and 60°, and preferably between 40° and 50°, so as to retain the insects 10 directed towards the outlet mouth 42 without however retaining them within the suction channel 40 but allowing them to exit through the passage sections 81.

More in detail, each crushing sheet 8 is extended on an extension plane β which is defined by the substantially plate-like surface of the crushing sheet 8, and such extension plane β is tilted with respect to the lying plane α of the plurality of crushing sheets 8, preferably by a value comprised between those indicated above.

In particular, the first edge 810 of each crushing sheet 8 is directed towards the suction fan 5, and the second edge 811 of each crushing sheet 8 is directed towards the outlet mouth 42 of the suction channel 40.

Advantageously, the crushing sheets 8 are adjustable.

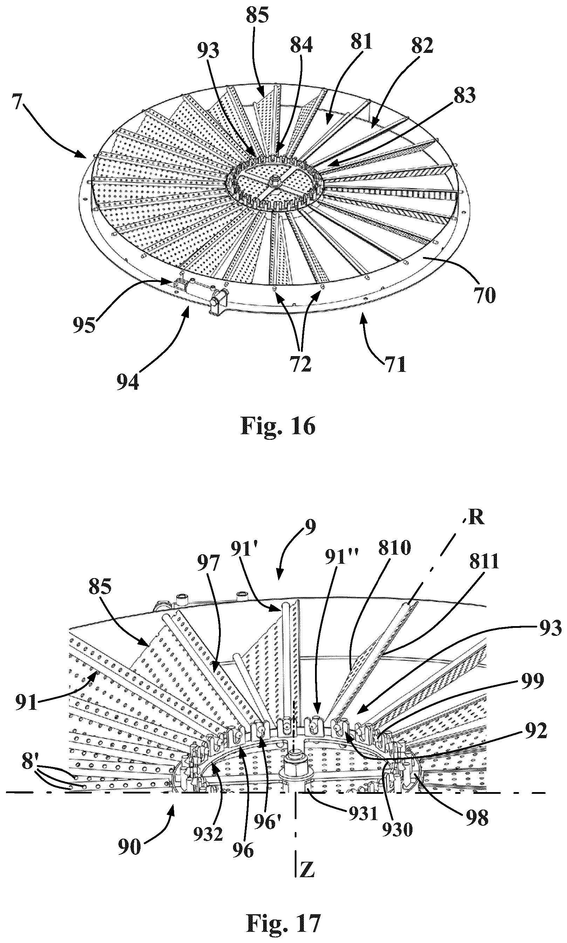

More in detail, in accordance with a first embodiment variant of the crushing means 6 illustrated in figures 16 and 17, the crushing sheets 8 are rotatably connected to the support body 7, and are rotatable around respective second rotation axes R in order to adjust their tilt with respect to the lying plane α.

In particular, the tilt of the crushing sheets 8 can be adjusted so that the latter have an angle comprised between 30° and 90° with respect to the lying plane α.

In particular, the second rotation axes R are placed on a plane parallel to the lying plane α, and are preferably placed orthogonal to the first rotation axis W.

Advantageously, the second rotation axes R are extended radially from the central body 80 to the perimeter wall 70 of the support body 7.

In this manner, an operator can advantageously increase or reduce the passage section 81 defined by the crushing sheets 8. For example, by setting the tilt of the crushing sheets 8 at a 90° angle, the operator can free the passage section 81 itself from possible obstruction in order to allow the correct exit of the insects 10 and of the third elements through the outlet mouth 42 of the containment body 4 of the suction unit 3. Advantageously, each suction unit 3 comprises a collection body 31, for example a retention net, placed downstream of the outlet mouth 42, outside the containment body 4. In particular, each collection body 31 is fixed to the support body 7 of the crushing means 6, preferably at the perimeter wall 70. Advantageously, the collection body 31 is arranged for retaining the insects suctioned by the suction unit 3, preventing these from being thrown out on the field to be treated. Advantageously, each collection body 31 is provided with a discharge opening 310 and, preferably, the machine 1 comprises multiple conveyance tubes 32, each of which provided with an air conveyance opening connected to a corresponding discharge opening 310 of the collection bodies 31, in order to allow the passage of the insects from the collection body 31 to the corresponding conveyance tube 32 itself. Advantageously, the machine 1 comprises multiple manifold pipes 33, air connected to the conveyance tubes 32, in order to receive the suctioned insects from the latter.

In particular, two or more of the manifold pipes 33 are connected together up to a common containment portion 34, according to a substantially V shaped profile, in particular through removable fixing means (e.g. bolts), which are arranged for allowing the separation between the manifold pipes 33 themselves, so as to discharge the collected insects. More in detail, once the manifold pipes 33 connected through the aforesaid removable fixing means are separated, the bending means 26 can command the bending of the support arms 24 between the aforesaid operative position and the raised position (and vice versa), as set forth above, in order to allow the emptying of the collected insects.

Advantageously, the machine 1 for suctioning insects 10 from plants 11 comprises actuation means 9, mechanically connected to the crushing sheets 8 and actuatable for rotating the latter around the respective second rotation axes R in order to adjust their tilt with respect to the lying plane α.

Advantageously, the actuation means 9 comprise a motion conversion member 90, which is configured for converting an initial actuation motion in a final actuation motion around the second rotation axis R.

More in detail, the initial actuation motion can also be rotatory, for example being a rotary motion around the first rotation axis W (or along a direction parallel to the latter axis), or it can be a rectilinear motion.

In accordance with the preferred embodiment illustrated in figures 16 and 17, the motion conversion member 90 is configured for converting (for each crushing sheet 8) a rectilinear actuation motion, in particular imparted by a linear actuator, in a rotary motion around the second rotation axis R.

Advantageously, the motion conversion member 90 comprises a plurality of actuation elements 91, each of which fixed to a corresponding crushing sheet 8, and is preferably provided with at least one first lever arm 92.

Advantageously, each actuation element 91 is rotatably connected to the support body 7, and is rotatable (integral with the corresponding crushing sheet 8) around the respective second rotation axis R.

Advantageously, the motion conversion member 90 also comprises a transport element 93, on which the first lever arms 92 of the actuation elements 91 are radially mounted, and which is rotatably actuatable in rotation around an actuation axis Z, substantially orthogonal to the second rotation axes R, in order to act on the first lever arms 92 and each actuation element 91 rotating around the respective second rotation axis R. Preferably, the actuation axis Z is substantially coinciding with the first rotation axis W of the suction fan 5.

In particular, the transport element 93 is rotatably engaged with the central body 80 of the crushing means 6. More in detail, the transport element 93 comprises an internal disc 930, which is pivoted on a hinge 931 of the central body 80, and such hinge 931 projects above the latter, towards the outlet mouth 42.

More in detail, the internal disc 930 is provided with a circumferential portion 932 from which two crosspieces are diametrically extended that are substantially orthogonal to each other, which meet at the center of the internal disc 930, at which an engagement hole is made in order to allow the internal disc 930 to rotatably engage the hinge 931.

Advantageously, the actuation means 9 also comprise at least one actuation member 94, for example a hydraulic cylinder or an electric motor, which is mechanically connected to the transport element 93 and arranged for rotating the transport element 93 around the actuation axis Z in order to induce the rotation of the crushing sheets 8 around the respective rotation axes R.

More in detail, the actuation member 94 can be directly connected to the transport element 93, so as to directly command the latter in order to rotate all the crushing sheets 8 simultaneously, or it can be indirectly connected to the transport element 93. For example, in accordance with figures 16 and 17, the actuation member 94 is mechanically connected to a crushing sheet 8, in particular to a corresponding actuation element 91, in order to rotate the latter and consequently rotate the other crushing sheets 8 through the transport of the motion given by the cooperation between the transport element 93 and the other actuation elements 91.

Advantageously, each of the actuation elements 91 is extended between an external end 91', placed at the second end 85 of the crushing sheet 8, and an internal end 91", placed at the first end 84 of the crushing sheet 8.

Advantageously, each of the actuation elements 91 is extended between the external end 91', which is rotatably connected to the perimeter wall 70 of the support body 7, and the internal end 91", at which it is rotatably connected to the central body 80 and at which the first lever arm 92 is placed.

In particular, the perimeter wall 70 of the support body 7 is provided with a plurality of perimeter holes 72, which are adapted to rotatably house the external end 91' of a corresponding actuation element 91 inserted in one of the aforesaid perimeter holes 72.

Preferably, the internal end 91" of the actuation element 91 is connected to the central body 80 of the crushing means. Preferably, at the internal end 91" of each actuation element 91, a corresponding first lever arm 92 is made, which is configured for imparting a rotation of the transport element 93 following the rotation of the corresponding actuation element 91 around the second rotation axis R.

More in detail, the internal disc 930 of the transport element 93 is provided, on a circumferential portion 932 thereof, with a plurality of engagement elements 96, each of which is mechanically connected to the first lever arm 92 of the actuation element 91.

In particular, each engagement element 96 defines an engagement seat 96' within which the first lever arm 92 is at least partially housed, and in particular constrained for movements of the transport element 93 around the actuation axis Z.

More in detail, each engagement element 96 is substantially U shaped, with two lateral stems which project vertically from the internal disc 930, towards the outlet mouth 42, and which delimit the aforesaid engagement seat 96' between them.

Advantageously, the number of engagement elements 96 is equal to the number of crushing sheets 8, and hence advantageously also to the number of actuation elements 91.

In accordance with the first embodiment variant of the crushing means 6 illustrated in figures 16 and 17, the actuation element 91 is provided with a main rod-like portion 97, and the first lever arm 92 is substantially L shaped and is in particular provided with a spacing section 98, which projects vertically protruding from the main rod-like portion 97, and with an engagement section 99, which is placed substantially orthogonal to the spacing section 98, substantially parallel to the main rod-like portion 97 of the remaining actuation element 91. In particular, the engagement section 99 is intended to be inserted in the engagement seat 96' of a corresponding engagement element 96.

Advantageously, at least one of the actuation elements 91 is provided with a second lever arm 95, placed at the external end 91' of the actuation element 91.

In particular, the second lever arm 95 extends protruding from the main rod-like portion 97 of the actuation element 91, and is preferably identical to the first lever arm 92 described above (L shaped).

Advantageously, the actuation member 94 is mechanically connected to the second lever arm 95 in order to act on the latter and rotate the actuation element 91 around the second rotation axis R and the transport element 93 around the actuation axis Z.

In this manner, the actuation member 94 of the actuation means 9 of the machine 1 induce the rotation of the other actuation elements 91 mounted on the transport element 93, as set forth above.

In operation, with reference to the first embodiment variant illustrated, the actuation member 94 is linearly moved, and acts against the second lever arm 95 of the actuation element 91, inducing a rotary motion of the second lever arm 95 around the corresponding second rotation axis R. Consequently, the actuation element 91 and the first lever arm 92 rotate around the second rotation axis R and in turn induce the transport element 93 in rotation around the actuation axis Z, in particular by acting on the U-shaped engagement element 96.

Consequently, the transport element 93, on which all the other crushing sheets 8 with the respective actuation elements 91 are mounted, by rotating around the actuation axis Z moves the first lever arms 92 of the other actuation elements 91, also rotating the crushing sheets 8 and thus allowing the adjustment of the tilt.

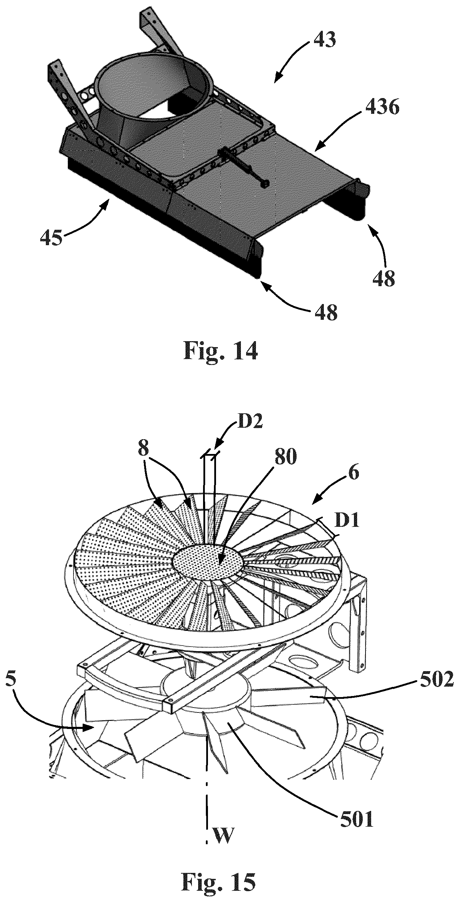

Advantageously, as illustrated in figure 15, the crushing means 6 are rotatably mounted in the containment body 4, around a third rotation axis T substantially orthogonal to the second rotation axis R. In particular, the third rotation axis T substantially coincides with the actuation axis Z.

Advantageously, the machine 1 comprises movement means 60, connected to the crushing means 6 and actuatable for rotating the crushing means 6 around the second rotation axis T.

In particular, the movement means 60 comprise a movement motor 61 (such as for example a hydraulic motor or an electric motor) adapted to generate a motion that is preferably rotary, and a transmission pulley 62, mechanically connected to the movement motor 61 and to the perimeter wall 70 of the support body 7 of the movement means 6.

More in detail, the transmission pulley 62 is arranged, e.g. externally wound on the perimeter wall 70, for transmitting the rotary motion to the latter and allowing the movement of the crushing means 6 around the third rotation axis T.

In this manner, the movement means 6 are advantageously subject to a circular movement which prevents the exit of the insects 10 suctioned by the suction unit 3 of the machine 1, and prevents the obstruction due to third elements, such as leaves and small bushes.

Hereinbelow further advantageous aspects of the invention will be described, relative in particular to the support frame 2 and to the suction unit 3 of the machine 1, which exist regardless of the characteristics of the crushing means 6.

Advantageously, in accordance with the first and the second embodiment of the present machine 1 illustrated in figures 1 - 5 and 19, the support frame 2 comprises a main connection body 23 susceptible of being mechanically connected to the farm tractor 13.

Advantageously, the main connection body 23 is extended mainly orthogonal to the advancing direction Y, preferably substantially vertically and is preferably provided with one or more fixing flanges 23', in particular two fixing flanges 23', which are extended overhanging along the advancing direction Y and are intended to be fixed to the farm tractor 13.

Advantageously, the main connection body 23 comprises a fixed portion 230, and a movable portion 231, slidably engaged with the fixed portion 230 and susceptible of being vertically moved in order to lift the movable portion 231 and the elements connected thereto during the different processing steps of the machine 1.

Advantageously, the fixed portion 230 of the main connection body 23 comprises a support tube 232, which is extended mainly along the aforesaid extension direction V.

Advantageously, the main connection body 23 comprises a first double-acting hydraulic cylinder 233, which is provided with a fixed element, fixed to the fixed portion 230 of the main connection body 23, and a movable jacket, slidably mounted on the fixed element and connected to the movable portion 231 in order to lift and/or lower the movable portion 231 as described briefly above.

In particular, the support frame 2 comprises at least one support arm 24 which is mechanically fixed to the main connection body 23.

Advantageously, in accordance with the first and the second embodiment of the present machine 1 illustrated in figures 1 - 5 and 19, the support arm 24 is extended from the main connection body 23 substantially parallel to the extension direction V of the support frame 2 itself.

Otherwise, in accordance for example with the third and the fourth embodiment of the machine 1 illustrated in figures 20 and 21, the support arm 24 is extended from the main connection body 23 substantially orthogonal to the extension direction V, e.g. vertically.

Advantageously, each support arm 24 is fixed to the fixed portion 230 of the main connection body 23, in particular to the support tube 232 and preferably it is fixed above in abutment against the latter.

Preferably, the support frame 2 comprises two support arms 24, which are extended from opposite sides of the main connection body 23 and which are preferably attained integral with each other.

Advantageously, the support frame 2 also comprises at least one movable arm 25, and preferably two movable arms 25, which are mechanically connected ad a corresponding support arm 24.

In particular, the movable arms 25 are slidably engaged with the corresponding support arm 24 in order to slide along the extension direction V and allow the support frame 2 to translate along the aforesaid extension direction V. The sliding of the movable arms 25 along the aforesaid extension direction V can be carried out manually, or by means of suitable movement means (e.g. with linear actuators) well-known to the man skilled in the art and therefore not described in detail hereinbelow.

The movable arms 25 can slide externally with respect to the corresponding support arm 24, in particular they can be of telescopic type, in which the movable arm 25 is at least partially inserted inside the support arm 24, or they can be placed above in abutment against the same support arm 24, for example being able to slide externally with respect to the latter.

Advantageously, the support arms 24 are hinged around a hinging axis with respect to the main connection body 23, in particular to the fixed portion 230 of the latter, and are bendable around the aforesaid hinging axis so as to allow moving the aforesaid support arms 24 between an operative position, in which the aforesaid support arms 24 are placed substantially horizontally, in particular parallel to the terrain, and a raised position, in which the aforesaid support arms 24 are placed substantially vertically, in particular orthogonal to the ground, so as to allow reducing the lateral bulk of the machine 1 at the end of the processing or if it is necessary to operate on zones with limited maneuvering spaces.

Advantageously, the support frame 2 also comprises bending means 26, e.g. hydraulic pistons, which are connected to the connection arms 24 and to the main connection body 23 and are configured for commanding the bending of the support arms 24 between the aforesaid operative position and the raised position (and vice versa).

Advantageously, the bending means 26 are in turn hinged to the connection arms 24 and to the main connection body 23.

For example, in accordance with the embodiments of the enclosed figures, the support frame 2 comprises two connection arms 24 and the bending means 26 are connected to both connection arms 24, in particular by means of a second and a third double-acting hydraulic cylinder 260, 261.

Of course, the support frame 2 can take on different mechanical and structural configurations without departing from the protective scope of the present patent.

For example, with reference to the third and fourth embodiment illustrated respectively in figures 20 and 21, the support frame 2 is configured substantially as a U, so as to place the suction units 3 laterally with respect to the plants 11 (which are preferably aligned along the rows) with the respective suction mouths 41 directed towards the plants 11 themselves.

In particular, in the aforesaid third and fourth embodiments of the machine 1, the latter is advantageously provided with two suction units 3, placed on opposite sides of the aforesaid row of plants 11.

As mentioned above, the support frame 2 comprises advantageously at least two or more guide wheels 27 in order to allow its advancement along the ground. Preferably, the support frame 2 comprises a number of guide wheels equal to at least n+1, where n indicates the number of the suction units 3 of the machine 1.

In particular, the support frame 2 comprises two lateral guide wheels 27' connected to the movable arms 25, and (n-1) internal guide wheels 27" placed between a suction unit 3 and the suction unit 3 that is adjacent and connected, for example, to the support arm 24 of the support frame 2.

Preferably, in accordance with the embodiments of the enclosed figures, the lateral guide wheels 27' are placed downstream of the internal guide wheels 27" with respect to the advancing direction Y.

Advantageously, at least the lateral guide wheels 27' are connected to the movable arms 25 through a corresponding support bracket (and preferably also the internal guide wheels 27" are connected to the support arm 24), which is telescopically engaged, along a slide direction that is substantially vertical (in particular orthogonal to the advancing direction Y and, preferably, to the extension direction V of the support frame 2) to a tubular portion. Preferably, the tubular portion is hollow and the support bracket is telescopically inserted inside the latter. In this manner, the telescopic support bracket allows height-wise adjusting of the support frame 2 and the wheels 27' between different operative groups. In particular, the hollow tubular portion is provided with multiple first fixing holes and the support bracket is provided with multiple second fixing holes, which can be aligned with each other and engageable by a locking element which allows fixing the lateral guide wheel 27' to the support frame 2 in a specific operative position, in order to vary the height of the support frame 2 itself with respect to the ground, so as to allow treating plants 11 of different height.

Advantageously, the support bracket fixed to the corresponding lateral guide wheel 27' is housed inside the corresponding hollow tubular portion such to be able to be rotated around a steering axis parallel to the slide direction. In particular, the support bracket and the corresponding hollow tubular portion are configured such to allow a limited rotation of the lateral guide wheel 27' around the aforesaid steering axis, preferably comprised between 45° and 60°.

Advantageously, the machine 1 comprises end deflectors, laterally fixed to the lateral guide wheels 27' (with respect to a middle line axis of the machine 1 parallel to the advancing direction Y), which define lateral end portions of the support frame 2 and allow preventing the contact between the support frame 2 itself (in particular of the support bracket of the lateral guide wheel 27') and possible obstacles along the advancing direction Y.

Advantageously, as set forth above, the machine 1 comprises multiple suction units 3, and in particular comprises a central suction unit 3, and multiple lateral suction units 3.

More in detail, the central suction unit 3 is fixed to the main connection body 23, in particular to the fixed portion 230 and preferably to the support arm 24 of the latter. The lateral suction units 3 are instead laterally placed with respect to the central suction unit 3 and are in particular fixed to separate support arms 24 of the support frame 2, on opposite sides with respect to the central suction unit 3.

In particular, the suction units 3 are fixed to the support arms 24 of the support frame 2 by means of removable connection means, e.g. U-bolts and corresponding perforated plates, in order to allow the fixing to the and the removal from the respective support arm 24 in different positions along the extension direction V of the support frame 2, so as to allow the user to adjust the suction units 3 on the basis of the required needs, for example on the bases of the beds/ridges B width.

Of course, the lateral suction units 3 can also be fixed to the movable arms 25 of the support frame 2, such to be able to vary the distance between the suction units 3 as a function of the distance which lies between two adjacent beds/ridges B of terrain following the movement of the movable arms 25 along the extension direction V.

Advantageously, the machine 1 comprises six suction units 3, preferably divided into three suction groups, each of which comprises three suction units 3.

In particular, the suction groups can be placed symmetrically with respect to a symmetry axis of the machine 1 or, alternatively, in an asymmetric manner with respect to such symmetry axis, in order to process and suction insects on only one of the two sides of the machine 1 (with respect to the advancing direction Y).

In such case, the present machine 1 is highly versatile, able to be adapted to different types of cultivations.

Advantageously, the containment body 4 of the suction unit 3 is provided with a hood 43, which is intended to be placed above the ground on which the plants 11 to be treated are placed and which comprises a plate 430, which is provided with a lower face 431, intended to be directed towards the ground, and an opposite upper face 432.

Advantageously, the plate 430 is provided, at the lower face 431 thereof, with a through opening 433, which defines the suction mouth 41 of the suction channel 40.

Advantageously, the plate 430 has a form, in plan view, substantially polygonal and preferably rectangular. Advantageously, the plate 430 is extended, parallel to the advancing direction Y, between a front edge 430' and an opposite rear edge 430". In operation, during use, the machine 1 advances on the ground, along the advancing direction Y, with the front edge 430' placed downstream of the rear edge 430".

Advantageously, the plate 430 is extended, orthogonal to the advancing direction Y, between two opposite lateral edges 430"', each of which placed to connect between the front edge 430' and the rear edge 430".

Advantageously, the through opening 433 of the plate 430 is extended substantially for the entire width of the plate 430, between the two opposite lateral edges 430‴. Advantageously, the through opening 433 is obtained non-centered on the plate 430 (along the advancing direction Y), and in particular it is placed closer to the rear edge 430" with respect to the front edge 430' of the plate 430.

Preferably, the through opening of the plate 430 is provided with a rectangular section.

Advantageously, the hood 43 is provided with an adjustment strap 44, which is mounted on the lower face 431 of the plate 430, at the through opening 433.

More in detail, the adjustment strap 44 is placed in front of the through opening 433 along the advancing direction Y, and is preferably placed along a long side of the rectangular profile of the through opening 433. Preferably, the adjustment strap 44 is extended substantially for the entire width of the plate 430, between the two opposite lateral edges 430"'.

The adjustment strap 44 is advantageously slidably mounted on the plate 430 (preferably slidably mounted along the advancing direction Y), and is movable between at least one maximum obstruction position, in which the adjustment strap 44 is placed at least to partially obstruct the through opening 433 (and hence of the suction mouth 41), and a minimum obstruction position, in which the adjustment strap 44 at least partially frees the through opening 433 with respect to when it is positioned in the maximum obstruction position. Preferably, in the minimum obstruction position, the adjustment strap 44 completely frees the through opening 433 and hence the suction mouth 41, in order to allow maximizing the suctioned air flow 12.

In this manner, the user can adjust, through the adjustment strap 44, the air flow 12 suctioned through the suction mouth 41 according to the requirements.

Advantageously, the hood 43 is provided with a front wing 434, which is fixed to the plate 430, preferably at the front edge 430' of the latter. Preferably, the front wing 434 is made integrally with the plate 430.

More in detail, the front wing 434 frontally protrudes from the plate 430, towards the advancing direction Y, and is preferably placed tilted vertically with respect to the same plate 430 (preferably between 10° and 50°). In particular, the front wing 434 is placed moving away from the ground, in order to define an air introduction mouth and thus increase the air flow 12 suctioned during machine 1 processing.

Advantageously, the hood 43 is provided with two lateral wings 435, placed on opposite sides of the plate 430. In particular, each lateral wing 435 is extended protruding transverse from the lower face 431 of the plate 430, preferably at a corresponding lateral edge 430"', and is susceptible of being directed towards the ground.

Preferably, the lateral wings 435 are placed tilted with respect to the plate 430 by an angle comprised between 100° and 140°.

Advantageously, the plate 430 delimits, with the front wing 434 and the lateral wings 435, a containment volume 30, within which in operation, during use of the machine 1, the plants 11 to be treated are intended to be found. The aforesaid containment volume 30 advantageously allows increasing the air flow 12 suctioned by the suction unit 3 and simultaneously limiting the exit of insects 10 (laterally and/or frontally from the hood 43) during the suction step.

Advantageously, the hood 43 comprises at least one deflector 45, which is connected to the lower face 431 of the plate 430, and protrudes below the latter towards the ground.

Preferably, the deflector 45 comprises at least one flexible strip 46, made of a material provided with high elasticity, such that it can be bent when it intercepts an obstacle, e.g. the plants 11 or the same bed/ridge B (in particular its tilted side) on which the plants 11 are cultivated. Preferably, the deflector 45 is made of a polymer material, such as for example rubber or rubberized fabric.

Advantageously, the hood 43 comprises a front deflector 45, which is preferably hinged to the plate 430, at the front edge 430' of the latter.

Advantageously, the hood 43 comprises two lateral deflectors 45, which are preferably hinged to the plate 430, at respective lateral edges 430‴ of the latter. During the operation of the machine 1, the lateral deflectors 46 are intended to rest on the oblique sides of the bed/ridge B.

Advantageously, the hood 43 comprises a rear deflector 45, which is preferably hinged to the plate 430, at the rear edge 430" of the latter.

In particular, the aforesaid deflectors 45 are hinged to the plate 430 by means of idle hinges, around respective rotation axes, so as to allow their free rotation around the aforesaid rotation axes, preventing the damage of the obstacles that they encounter, such as in particular the cultivations. More in detail, the rotation axes of the front and rear deflectors 45 are preferably substantially orthogonal to the advancing direction Y, while the rotation axes of the lateral deflectors 45 are preferably substantially parallel to the advancing direction Y.

Advantageously, the front and rear deflectors 45 are directly hinged to the plate 430, while the lateral deflectors 45 are preferably hinged to the plate 430 through a connection plate 47. Advantageously, the connection plate 47 is hinged to the lateral edge 43‴ of the plate 430 (by means of hinge elements) and fixed to the corresponding lateral deflector 45.

More in detail, the connection plates 47 are extended between an upper end hinged to the lateral edge 43‴ of the plate 430, and an opposite lower end fixed to the corresponding lateral deflector 45. Advantageously, the connection plates 47 have an extension, between the upper end and the opposite lower end, which is equivalent to the extension of the lateral wings 435 of the hood 43, in a manner such that the flexible straps 46 define a kind of extension of the aforesaid lateral wings 435 in order to further delimit, laterally, the containment volume 30 and further increase the air flow 12 suctioned by the suction unit 3 and prevent the outflow of the insects 10 laterally from the containment volume 30 itself.

Advantageously, the hood 43 is provided with an auxiliary portion, and preferably two auxiliary portions, each of which connected to the plate 430 at a corresponding lateral edge 430‴ and extended parallel to the extension direction V of the support frame 2. Preferably, each auxiliary portion is slidably connected, in particular by means of a respective telescopic mechanism (not represented), to the corresponding lateral edge 430‴ of the plate 430. More in detail, the lateral deflectors 45 are hinged, for example through the connection plate 47, alongside the respective auxiliary portion, outside the plate 430 with respect to middle line axis of the suction unit 3 parallel to the advancing direction Y. In this manner, an operator can increase or reduce the lateral bulk of the hood 43 in order to modify the containment volume 30 as a function of the different work needs, e.g. as a function of the width of the beds/ridges B.

Advantageously, the containment body 4 of the machine 1 is provided with retention means 49, arranged for being abutted against the mulching fabric and ballasting the latter during the operation of the machine 1, so as to retain the mulching fabric in position and prevent its lifting during the suction of insects 10.

In accordance with the preferred embodiment, illustrated in the enclosed figures, the retention means 49 comprise a chain, preferably metallic, which is extended between two opposite ends that are connected to the lower face of the plate 430.

Advantageously, the two ends of the chain are fixed aligned along the advancing direction Y, in particular with a first end fixed in proximity to the front edge 430' of the plate 430, and a second end fixed in proximity to the opposite rear edge 430".

Preferably, the chain is provided with a length (measured between the opposite ends thereof) such to allow abutting against the mulching fabric during the advancement of the machine 1.

Advantageously, for example with reference to figure 14, the hood 43 is provided with a modular extension 436, which is mechanically connected the plate 430, in front of the latter along the advancing direction Y. Such modular extension 436 allows extending the length of the plate 430 along the advancing direction Y.

Advantageously, the modular extension 436 is connected to the plate 430 at the front edge 430' of the latter, and is extended projectingly starting from the aforesaid front edge 430'. Preferably, the modular extension 436 is hinged to the plate 430 and is movable between a first position, in which it is placed as an extension of the plate 430, substantially parallel to and aligned with the latter, and a second position, in which it is placed lifted with respect to the plate 430, in particular being placed substantially orthogonal with respect to the latter.

Alternatively, the modular extension 436 is connected telescopically to the plate 430 and is slidable along a direction parallel to the advancing direction Y.

Advantageously, the modular extension 436 is also provided with wings (frontal and lateral) which have the same characteristics of the frontal 431 and lateral 432 wings described above. In the same manner, the modular extension 436 is provided with secondary deflectors 48 which have the same characteristics as the above-described lateral deflectors 45.

Advantageously, the wings and the secondary deflectors 48 of the modular extension 436 are placed in continuity respectively with the lateral wings 435 and with the lateral deflectors 45.

Advantageously, the containment body 4 of the suction unit 3 also comprises an upper structure, placed above the hood 43 and adapted to house the aforesaid suction fan 5 and the crushing means 6.

In particular, the containment body 4 comprises a containment ring 50, which is placed above the hood 43, is internally hollow and is arranged for housing the suction fan 5 at its interior.

Preferably, the containment body 4 of the suction unit 3 also comprises a first connection element 51, internally hollow, which is interposed between the hood 43 and the containment ring 50. In particular, the first connection element 51 is extended starting from the hood 43 up to the containment ring 50, which is positioned in abutment against the first connection element 51 itself.

Advantageously, the containment ring 50 has ring shape, with diameter greater than the suction fan 5 so as to contain the latter at its interior.

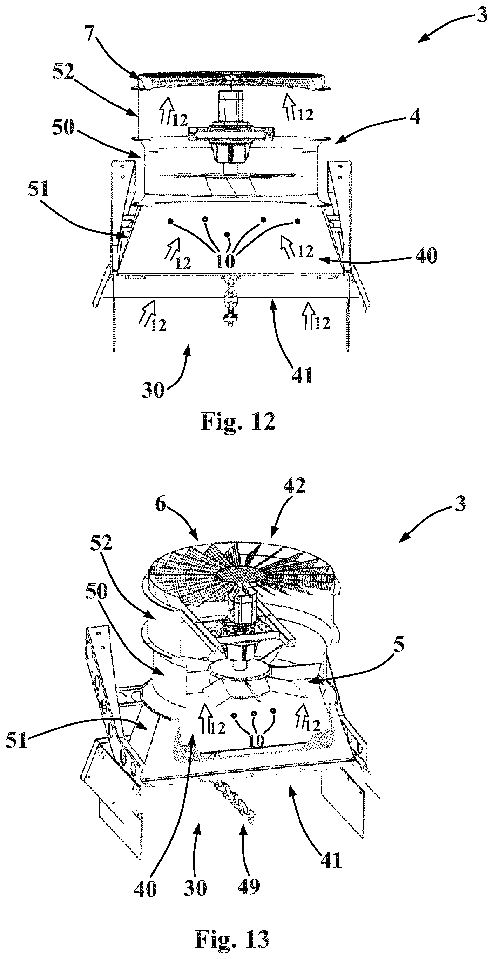

With reference to figure 12, in accordance with the preferred embodiment, the first connection element 51 is tapered upward, having trapezoidal section. Otherwise, in accordance with a non-illustrated embodiment variant, the first connection element 51 has a rectangular section.

Advantageously, in a manner per se known to a man skilled in the art, the suction unit 3 is provided with a fixing bracket, which comprises two crosspieces abutting against the containment ring 50, and between such crosspieces a fixing plate is transversely placed (preferably orthogonally), on which the rotation shaft of the suction fan 5 is rotatably mounted.

Advantageously, the containment body 4 comprises a second connection element 52, which is internally hollow hollow, is placed above the containment ring 50, and is arranged for connecting the latter to the support body 7.

In particular, the second connection element 52 is extended starting from the containment ring 50 up to the support body 7, which is preferably positioned in abutment against the second connection element 52 itself.

Preferably, the support body 7 has annular shape, with diameter substantially coinciding with the diameter of the second connection element 52 in order to be placed in abutment against the latter.

In operation, the machine 1 for suctioning insects 10 from plants 11 is positioned with the suction units 3 aligned with the main direction X of the beds/ridges B and proceeds along the advancing direction Y. Advantageously, during the operations of alignment of the suction units 3 with the main directions X of the beds/ridges B (or, otherwise, of the rows of plants 11), the carriage 230 is lifted from the ground and the movable arms 25 are bent, so as to facilitate the movement of the machine 1. Following the alignment of the machine 1 along the advancing direction Y, the movable arms 25 are extended along the extension direction V of the support frame 2, in order to more precisely align the suction units 3 with the main directions X of the beds/ridges B (or of the rows of plants 11). At the end of such alignment, the carriage 230 of the support frame 2 is lowered in order to place the suction units 3 above the plants 11 (or, in the case of the third and fourth embodiments, the support frame 2 is positioned in order to place the suction units 3 laterally with respect to the plants 11) and proceed along the advancing direction Y. During the advancement of the machine 1, the suction fan 5 suctions an air flow 12 within the containment body 4, and such air flow 12 extirpates the insects 10 from the plants 11 and forces them to follow the suction channel 40 from the suction mouth 41 towards the outlet mouth 42. Advantageously, in particular for the first and second embodiments in which the machine 1 is placed above the beds/ridges B of terrain, the presence of the front, lateral and rear deflectors 45, contribute to the formation of the containment volume 30 between the bed/ridge B and the plants 11, in this manner increasing the air flow 12 within the suction channel 41. After having traveled beyond the suction fan 5 placed along the aforesaid suction channel 41, the crushing sheets 8 of the crushing means 6 intercept the insects 10 directed towards the outlet mouth 42 before the insects 10 themselves reach the latter. Advantageously, the impact of the insects 10 against the crushing sheets 8 is such that at least part of the insects 10 is killed by the crushing means 6 such that the insects 10 themselves do not later return to infest the plants 11. Following impact, the insects are brought to slide, via centrifugal force, towards the perimeter wall 70 exiting from the outlet mouth 42.

In the same manner, also the possible third elements accidentally suctioned by the machine 1, such as leaves and/or small bushes, radially slide along the crushing sheets 8 of the crushing means 6, also exiting from the outlet mouth 42 of the containment body 4 and therefore preventing the obstruction of the crushing means 6 of the suction unit 3, hence ensuring an optimal operation of the machine 1 for suctioning insects 10 from plants 11.

The invention thus conceived therefore attains the pre-established objects.

## Claims

1. Machine (1) for suctioning insects (10) from plants (11), which comprises:
- a support frame (2), which is intended to be connected to a drive unit (20) in order to advance on a terrain;
- a power connector, which is fixed to said support frame (2) and is intended to be connected to an actuation member;
- at least one suction unit (3), which is fixed to said support frame (2) and comprises:
- a containment body (4), provided with a suction channel (40) which is extended between a suction mouth (41), susceptible of being directed towards said plants (11) to be treated, and an opposite outlet mouth (42);
- at least one suction fan (5), which is placed in said suction channel (40), is rotatably mounted in said containment body (4), is operatively connected to said power connector and is actuatable by the latter in rotation around a first rotation axis (W) in order to suction an air flow (12) from said suction mouth (41) towards said outlet mouth (42) and suction insects (10) from said plants (11);
- crushing means (6), mounted in said containment body (4) and placed to intercept said suction channel (40), downstream of said suction fan (5), and comprising:
- a support body (7), fixed to said containment body (4) and provided with a perimeter wall (70) delimiting a passage opening (71) for said air flow (12); and
- a plurality of crushing sheets (8), which are mechanically connected to said support body (7), are extended radially from a central body (80) to the perimeter wall (70) of said support body (7) and are placed to intercept said passage opening (71), in order to intercept and crush the insects (10) suctioned by said suction fan (5).
wherein each of said crushing sheets (8) defines, with an adjacent crushing sheet (8), a passage section (81) through which the crushed insects (10) can pass beyond said crushing means (6) in order to exit from the outlet mouth (42) of said suction unit (3);
wherein said passage section (81) is tapered from the perimeter wall (70) of said support body (7) towards said central body (80); and
wherein said passage section (81) is extended between:
- an enlarged section (82), at the perimeter wall (70) of said support body (7), in which two said adjacent crushing sheets (8) are placed at a first distance (D1);
- and an opposite narrow section (83), at said central body (80), in which two said adjacent crushing sheets (8) are placed at a second distance (D2), smaller than said first distance (D1).

2. Machine (1) according to claim 1, **characterized in that** each of said crushing sheets (8) is extended between a first end (84), which is placed at said central body (80), and a second end (85), which is placed at the perimeter wall (70) of said support body (7).

3. Machine (1) according to claim 2, **characterized in that** each of said crushing sheets (8) is mechanically connected at said first end (84) thereof to said central body (80), and at the said second end (85) thereof to the perimeter wall (70) of said support body (7).

4. Machine (1) according to any one of the preceding claims, **characterized in that** the said first distance (D1) is comprised between 70 and 100 millimeters, and said second distance (D2) is comprised between 15 and 30 millimeters.

5. Machine (1) according to any one of the preceding claims, **characterized in that** each of said crushing sheets (8) is extended with a tapered profile from the perimeter wall (70) of said support body (7) towards said central body (80).

6. Machine (1) according to any one of the preceding claims, **characterized in that** said crushing sheets (8) are placed on a common lying plane (α), passing through said crushing sheets (8);
each of said crushing sheets (8) being tilted with respect to said lying plane (α) by an angle comprised between 30° and 60°.

7. Machine (1) according to any one of the preceding claims, **characterized in that** said crushing sheets (8) are rotatably connected to said support body (7), and are rotatable around respective second rotation axes (R) in order to adjust their tilt with respect to said lying plane (α).

8. Machine (1) according to claim 7, **characterized in that** it comprises actuation means (9), mechanically connected to said crushing sheets (8) and actuatable for rotating said crushing sheets (8) around respective said second rotation axes (R) in order to adjust their tilt with respect to said lying plane (α).

9. Machine (1) according to claim 8, **characterized in that** said actuation means (9) comprise:
- a motion conversion member (90), which comprises a plurality of actuation elements (91), each of which is fixed to a corresponding crushing sheet (8) and is provided with at least one first lever arm (92), and a transport element (93), on which the first lever arms (92) of said actuation elements (91) are radially mounted and which is rotatably actuatable in rotation around an actuation axis (Z), substantially orthogonal to said second rotation axes (R), in order to act on said first lever arms (92) and rotate said actuation element (91) around a respective second rotation axis (R);
- at least one actuator member (94), mechanically connected to said transport element (93) and arranged for rotating said transport element (93) around said actuation axis (Z) in order to induce the rotation of said crushing sheets (8) around the respective said rotation axes (R).

10. Machine (1) according to claim 9, **characterized in that** each of said actuation elements (91) is extended between:
- an external end (91'), at which it is rotatably connected to the perimeter wall (70) of said support body (7); and
- an internal end (91"), at which it is rotatably connected to said central body (80) and at which said first lever arm (92) is placed;
at least one of said actuation elements (91) being provided with a second lever arm (95), placed at the external end (91') of said actuation element (91), and said actuator member (94) being mechanically connected to said second lever arm (95) in order to act on said second lever arm (95) and rotate said actuation element (91) around said second rotation axis (R) and said transport element (93) around said actuation axis (Z), inducing the rotation of the other actuation elements (91) mounted on said transport element (93).

11. Machine (1) according to any one of the preceding claims, **characterized in that** said crushing means (6) are rotatably mounted in said containment body (4), around a third rotation axis (T) substantially orthogonal to said second rotation axis (R);
said machine (1) comprising movement means (60), connected to said crushing means (6) and actuatable for rotating said crushing means (6) around said second rotation axis (T).

## Patentansprüche

1. Maschine (1) zum Absaugen von Insekten (10) von Pflanzen (11), die Folgendes umfasst:
- einen Tragrahmen (2), der dazu bestimmt ist, mit einer Antriebseinheit (20) verbunden zu werden, um sich auf einem Gelände fortzubewegen;
- einen Stromanschluss, der an dem genannten Tragrahmen (2) befestigt und dazu bestimmt ist, mit einem Antriebselement verbunden zu werden;
- mindestens eine Absaugeinheit (3), die an dem genannten Tragrahmen (2) befestigt ist und Folgendes umfasst:
- ein Gehäuse (4), das mit einem Ansaugkanal (40) versehen ist, der zwischen einer Ansaugöffnung (41), die geeignet ist, auf die genannten zu behandelnden Pflanzen (11) gerichtet zu werden, und einer gegenüberliegenden Auslassöffnung (42) verläuft;
- mindestens ein Sauggebläse (5), das in dem genannten Ansaugkanal (40) angeordnet ist, drehbar in dem genannten Gehäuse (4) gelagert ist, operativ mit dem genannten Stromanschluss verbunden ist und von diesem letzteren um eine erste Drehachse (W) in Drehung versetzt werden kann, um einen Luftstrom (12) von der genannten Ansaugöffnung (41) zu der genannten Auslassöffnung (42) anzusaugen und Insekten (10) von den genannten Pflanzen (11) abzusaugen;
- Zerkleinerungsvorrichtungen (6), die in dem genannten Gehäuse (4) montiert und den genannten Ansaugkanal (40), nach dem genannten Sauggebläse (5), erfassend angeordnet sind, und Folgendes umfassen:
- einen Stützkörper (7), der an dem genannten Gehäuse (4) befestigt und mit einer Umfangswand (70) versehen ist, die eine Durchgangsöffnung (71) für den genannten Luftstrom (12) begrenzt; und
- eine Vielzahl von Zerkleinerungslamellen (8), die mechanisch mit dem genannten Stützkörper (7) verbunden sind, radial von einem zentralen Körper (80) zur Umfangswand (70) des genannten Stützkörpers (7) verlaufen und die genannte Durchgangsöffnung (71) erfassend positioniert sind, um die von dem genannten Sauggebläse (5) angesaugten Insekten (10) abzufangen und zu zerkleinern.
wobei jede der genannten Zerkleinerungslamellen (8), zusammen mit einer angrenzenden Zerkleinerungslamelle, (8) einen Durchgangsabschnitt (81) definiert, über den die zerkleinerten Insekten (10) die genannten Zerkleinerungsvorrichtungen (6) überqueren können, um aus der Auslassöffnung (42) der genannten Absaugeinheit (3) auszutreten;
wobei sich der genannte Durchgangsabschnitt (81) von der Umfangswand (70) des genannten Stützkörpers (7) hin zu dem genannten zentralen Körper (80) verjüngt; und
wobei der genannte Durchgangsabschnitt (81) zwischen Folgendem verläuft:
- einem verbreiterten Abschnitt (82) an der Umfangswand (70) des genannten Stützkörpers (7), in dem zwei genannte angrenzende Zerkleinerungslamellen (8) in einem zweiten Abstand (D2) positioniert sind, der kleiner ist als der genannte erste Abstand (D1);
- und einem gegenüberliegenden verengten Abschnitt (83) an dem genannten zentralen Körper (80), in dem zwei genannte angrenzende Zerkleinerungslamellen (8) in einem zweiten Abstand (D2) positioniert sind, der kleiner ist als der genannte erste Abstand (D1).

2. Maschine (1) nach Anspruch 1, **dadurch gekennzeichnet, dass** jede der genannten Zerkleinerungslamellen (8) zwischen einem ersten Ende (84), das an dem genannten zentralen Körper (80) angeordnet ist, und einem zweiten Ende (85), das an der Umfangswand (70) des genannten Stützkörpers (7) angeordnet ist, verläuft.

3. Maschine (1) nach Anspruch 2, **dadurch gekennzeichnet, dass** jede der genannten Zerkleinerungslamellen (8) an ihrem genannten ersten Ende (84) mechanisch mit dem genannten zentralen Körper (80) verbunden ist, und an ihrem genannten zweiten Ende (85) mit der Umfangswand (70) des genannten Stützkörpers (7) verbunden ist.

4. Maschine (1) nach einem beliebigen der vorangegangenen Ansprüche, **dadurch gekennzeichnet, dass** der genannte erste Abstand (D1) zwischen 70 und 100 Millimetern und der genannte zweite Abstand (D2) zwischen 15 und 30 Millimetern liegt.

5. Maschine (1) nach einem beliebigen der vorangegangenen Ansprüche, **dadurch gekennzeichnet, dass** jede der genannten Zerkleinerungslamellen (8) mit einem sich von der Umfangswand (70) des genannten Stützkörpers (7) zu dem genannten zentralen Körper (80) hin verjüngenden Profil verläuft.

6. Maschine (1) nach einem beliebigen der vorangegangenen Ansprüche, **dadurch gekennzeichnet, dass** die genannten Zerkleinerungslamellen (8) in einer gemeinsamen Lageebene (α) angeordnet sind, die durch die genannten Zerkleinerungslamellen (8) verläuft;
wobei jede der genannten Zerkleinerungslamellen (8) im Verhältnis zu der genannten Lageebene (α) um einen Winkel zwischen 30° und 60° geneigt ist.

7. Maschine (1) nach einem beliebigen der vorangegangenen Ansprüche, **dadurch gekennzeichnet, dass** die genannten Zerkleinerungslamellen (8) drehbar mit dem genannten Stützkörper (7) verbunden sind und um jeweilige zweite Drehachsen (R) drehbar sind, um ihre Neigung im Verhältnis zu der genannten Lageebene (α) einzustellen.

8. Maschine (1) nach Anspruch 8, **dadurch gekennzeichnet, dass** sie Antriebsmittel (9) umfasst, die mechanisch mit den genannten Zerkleinerungslamellen (8) verbunden sind und betätigt werden können, um die genannten Zerkleinerungslamellen (8) um die jeweiligen genannten zweiten Drehachsen (R) zu drehen, um ihre Neigung im Verhältnis zu der genannten Lageebene (α) einzustellen.

9. Maschine (1) nach Anspruch 9, **dadurch gekennzeichnet, dass** die genannten Antriebsmittel (9) Folgendes umfassen:
- ein Bewegungsumwandlungsorgan (90), das eine Vielzahl von Antriebselementen (91) umfasst, von denen jedes an einer entsprechenden Zerkleinerungslamelle (8) befestigt ist und mit mindestens einem ersten Hebelarm (92) versehen ist, sowie ein Förderelement (93), an dem die ersten Hebelarme (92) der genannten Antriebselemente (91) radial angebracht sind und das um eine Antriebsachse (Z) in Drehung versetzt werden kann, die im Wesentlichen senkrecht zu den genannten zweiten Drehachsen (R) verläuft, um auf die genannten ersten Hebelarme (92) einzuwirken und das genannte Antriebselement (91) um die jeweilige zweite Drehachse (R) zu drehen;
- mindestens ein Stellglied (94), das mechanisch mit dem genannten Förderelement (93) verbunden und dazu ausgelegt ist, das genannte Förderelement (93) um die genannte Antriebsachse (Z) in Drehung zu versetzen, um die Drehung der genannten Zerkleinerungslamellen (8) um die jeweiligen genannten Drehachsen (R) zu bewirken.

10. Maschine (1) nach Anspruch 10, **dadurch gekennzeichnet, dass** jedes der genannten Antriebselemente (91) zwischen Folgendem verläuft:
- einem äußeren Endabschnitt (91'), an dem es drehbar mit der Umfangswand (70) des genannten Stützkörpers (7) verbunden ist; und
- einem inneren Endabschnitt (91''), an dem es drehbar mit dem genannten zentralen Körper (80) verbunden ist und an dem der genannte erste Hebelarm (92) angeordnet ist;
wobei mindestens eines der genannten Antriebselemente (91) mit einem zweiten Hebelarm (95) ausgestattet ist, der an dem äußeren Endabschnitt (91') des genannten Antriebselements (91) angeordnet ist, und wobei das genannte Stellglied (94) mechanisch mit dem genannten zweiten Hebelarm (95) verbunden ist, um auf den genannten zweiten Hebelarm (95) einzuwirken und das genannte Antriebselement (91) um die genannte zweite Drehachse (R) und das genannte Förderelement (93) um die genannte Antriebsachse (Z) zu drehen, wodurch die Drehung der anderen an dem genannten Förderelement (93) montierten Antriebselemente (91) bewirkt wird.

11. Maschine (1) nach einem beliebigen der vorangegangenen Ansprüche, **dadurch gekennzeichnet, dass** die genannten Zerkleinerungsvorrichtungen (6) in dem genannten Gehäuse (4) um eine dritte Drehachse (T) drehbar gelagert sind, die im Wesentlichen senkrecht zur genannten zweiten Drehachse (R) ist;
wobei die genannte Maschine (1) Bewegungsmittel (60) umfasst, die mit den genannten Zerkleinerungsvorrichtungen (6) verbunden sind und betätigt werden können, um die genannten Zerkleinerungsvorrichtungen (6) um die genannte zweite Drehachse (T) zu drehen.

## Revendications

1. Machine (1) à sucer les insectes (10) des plantes (11), comprenant :
- un châssis de support (2), destiné à être relié à une unité motrice (20) pour se déplacer sur un terrain ;
- un connecteur de puissance, qui est fixé audit châssis de support (2) et destiné à être relié à un organe d'entraînement ;
- au moins une unité d'aspiration (3) fixée audit châssis de support (2) et comprenant :
- un corps de confinement (4), muni d'un canal d'aspiration (40) s'étendant entre une bouche d'aspiration (41), susceptible d'être orientée vers lesdites plantes (11) à traiter, et une bouche de sortie opposée (42) ;
- au moins un ventilateur d'aspiration (5), qui est disposé dans ledit canal d'aspiration (40), est monté de manière rotative dans ledit corps de confinement (4), est relié de manière fonctionnelle audit connecteur de puissance et peut être entraîné en rotation par ce dernier autour d'un premier axe de rotation (W) afin d'aspirer un flux d'air (12) de ladite bouche d'aspiration (41) vers ladite bouche de sortie (42), et d'aspirer des insectes (10) desdites plantes (11) ;
- des moyens de broyage (6), montés dans ledit corps de confinement (4) et disposés de manière à intercepter ledit canal d'aspiration (40), en aval dudit ventilateur d'aspiration (5), et comprenant :
- un corps de soutien (7), fixé audit corps de confinement (4) et muni d'une paroi périphérique (70) délimitant une ouverture de passage (71) pour ledit flux d'air (12) ; et
- une pluralité de lamelles de broyage (8), qui sont reliées mécaniquement audit corps de soutien (7), s'étendent radialement à partir d'un corps central (80) jusqu'à la paroi périphérique (70) dudit corps de soutien (7) et sont placées pour l'interception de ladite ouverture de passage (71), afin d'intercepter et de broyer les insectes (10) aspirés par ledit ventilateur d'aspiration (5).
dans laquelle chacune desdites lamelles de broyage (8) définit, avec une lamelle de broyage (8) adjacente, une section de passage (81) à travers laquelle les insectes (10) broyés peuvent traverser lesdits moyens de broyage (6) pour sortir par la bouche de sortie (42) de ladite unité d'aspiration (3) ;
dans laquelle ladite section de passage (81) va en se rétrécissant de la paroi périphérique (70) dudit corps de soutien (7) vers ledit corps central (80) ; et
dans laquelle ladite section de passage (81) s'étend entre :
- une section élargie (82), au niveau de la paroi périphérique (70) dudit corps de soutien (7), dans laquelle deux desdites lamelles de broyage (8) adjacentes sont espacées d'une deuxième distance (D2), inférieure à ladite première distance (D1) ;
- et une section rétrécie opposée (83), au niveau dudit corps central (80), dans laquelle deux desdites lamelles de broyage (8) adjacentes sont espacées d'une deuxième distance (D2), inférieure à ladite première distance (D1).

2. Machine (1) selon la revendication 1, **caractérisée en ce que** chacune desdites lamelles de broyage (8) se développe entre une première extrémité (84), qui est située au niveau dudit corps central (80), et une deuxième extrémité (85), qui est disposée au niveau de la paroi périphérique (70) dudit corps de soutien (7).

3. Machine (1) selon la revendication 2, **caractérisée en ce que** chacune desdites lamelles de broyage (8) est reliée mécaniquement, au niveau de sa première extrémité (84), audit corps central (80), et, au niveau de sa propre deuxième extrémité (85), à la paroi périphérique (70) dudit corps de soutien (7).

4. Machine (1) selon l'une quelconque des revendications précédentes, **caractérisée en ce que** ladite première distance (D1) est comprise entre 70 et 100 millimètres, et ladite deuxième distance (D2) est comprise entre 15 et 30 millimètres.

5. Machine (1) selon l'une quelconque des revendications précédentes, **caractérisée en ce que** chacune desdites lamelles de broyage (8) s'étend avec un profil effilé de la paroi périphérique (70) dudit corps de soutien (7) vers ledit corps central (80).

6. Machine (1) selon l'une quelconque des revendications précédentes, **caractérisée en ce que** lesdites lamelles de broyage (8) sont disposées sur un plan de pose commun (α), passant par lesdites lamelles de broyage (8) ;
chacune desdites lamelles de broyage (8) étant inclinée par rapport audit plan de pose (α) d'un angle compris entre 30° et 60°.

7. Machine (1) selon l'une quelconque des revendications précédentes, **caractérisée en ce que** lesdites lamelles de broyage (8) sont reliées de manière rotative audit corps de soutien (7), et peuvent tourner autour de deuxièmes axes de rotation (R) respectifs pour régler leur inclinaison par rapport audit plan de pose (α).

8. Machine (1) selon la revendication 8, **caractérisée en ce qu'**elle comprend des moyens d'entraînement (9), reliés mécaniquement auxdites lamelles de broyage (8) et pouvant être entraînés pour faire tourner lesdites lamelles de broyage (8) autour de leurs deuxièmes axes de rotation (R) respectifs afin de régler leur inclinaison par rapport audit plan de pose (α).

9. Machine (1) selon la revendication 9, **caractérisée en ce que** lesdits moyens d'entraînement (9) comprennent :
- un organe de conversion du mouvement (90), qui comprend une pluralité d'éléments d'entraînement (91), chacun d'eux étant fixé à une lamelle de broyage (8) correspondante et étant muni d'au moins un premier bras de levier (92), et un élément de transport (93), sur lequel les premiers bras de levier (92) desdits éléments d'entraînement (91) sont montés radialement, et qui peut être entraîné en rotation autour d'un axe d'entraînement (Z), sensiblement orthogonal auxdits deuxièmes axes de rotation (R), afin d'agir sur lesdits premiers bras de levier (92) et de faire tourner ledit élément d'entraînement (91) autour de son deuxième axe de rotation (R) respectif ;
- au moins un organe actionneur (94), relié mécaniquement audit élément de transport (93) et prédisposé pour déplacer en rotation ledit élément de transport (93) autour dudit axe d'entraînement (Z) afin de provoquer la rotation desdites lamelles de broyage (8) autour de leurs axes de rotation (R) respectifs.

10. Machine (1) selon la revendication 10, **caractérisée en ce que** chacun desdits éléments d'entraînement (91) s'étend entre :
- un embout extérieur (91'), au niveau duquel il est relié de manière rotative à la paroi périphérique (70) dudit corps de soutien (7) ; et
- un embout intérieur (91''), au niveau duquel il est relié de manière rotative audit corps central (80) et au niveau duquel ledit premier bras de levier (92) est disposé ;
au moins l'un desdits éléments d'entraînement (91) étant muni d'un deuxième bras de levier (95), disposé au niveau de l'embout extérieur (91') dudit élément d'entraînement (91), et ledit organe actionneur (94) étant relié mécaniquement audit deuxième bras de levier (95) pour agir sur ledit deuxième bras de levier (95) et faire tourner ledit élément d'entraînement (91) autour dudit deuxième axe de rotation (R) et ledit élément de transport (93) autour dudit axe d'entraînement (Z), provoquant la rotation des autres éléments d'entraînement (91) montés sur ledit élément de transport (93).

11. Machine (1) selon l'une quelconque des revendications précédentes, **caractérisée en ce que** lesdits moyens de broyage (6) sont montés de manière rotative dans ledit corps de confinement (4), autour d'un troisième axe de rotation (T) sensiblement orthogonal audit deuxième axe de rotation (R) ;
ladite machine (1) comprenant des moyens de mouvement (60), reliés auxdits moyens de broyage (6) et pouvant être entraînés pour faire tourner lesdits moyens de broyage (6) autour dudit deuxième axe de rotation (T).
